Europäisches Patentamt

**European Patent Office**

**Office européen des brevets**

(11) Publication number: **0 085 534**
**A1**

## (12) EUROPEAN PATENT APPLICATION

(21) Application number: **83300386.6**

(22) Date of filing: **26.01.83**

(51) Int. Cl.³: **B 65 D 30/08**
**B 65 D 81/38**

(30) Priority: **28.01.82 DE 8202094 U**

(43) Date of publication of application:
**10.08.83 Bulletin 83/32**

(84) Designated Contracting States:
**AT CH FR GB IT LI NL**

(71) Applicant: **The British Petroleum Company p.l.c.**
**Britannic House Moor Lane**
**London EC2Y 9BU(GB)**

(72) Inventor: **Utz, Kastulus**
**AOE Plastic GmbH Rotbuchenstrasse 1**
**D-8000 München 90(DE)**

(74) Representative: **Crack, Richard David et al,**
**BP INTERNATIONAL LIMITED Patents and Licensing**
**Division Chertsey Road**
**Sunbury-on-Thames Middlesex, TW16 7LN(GB)**

(54) **Insulating container, especially insulating carrier or insulating bag.**

(57) An insulating bag (1) has walls (10) made of a plurality of layers (11, 12) which form an air cushion and also a reflecting layer (13) for example a metal foil. The air cushion can be made up of compartments (15) formed by the layers (11, 12) the compartments being sealed against the outside air. The reflecting layer (13) can be a metallised layer of a plastics material.

FIG.1

EP 0 085 534 A1

1

## INSULATING CONTAINER, ESPECIALLY INSULATING CARRIER OR INSULATING BAG

The invention relates to an insulating container, especially an insulating carrier or an insulating bag.

Insulating containers are often employed for conveying ready-prepared foods, in order to maintain their temperature as long as possible at a level desirable for consumption. These foods may be hot foods, for example those with temperatures in the range from 50 to 80°C, or cold foods whose temperature is for example below 0°C, in particular ice cream.

Insulating containers are known which consist of a two layer structure, the inner layer being designed as a reflecting foil.

Insulating containers which are currently available and which consist of a two-layer material do not have satisfactory thermal insulation properties, that is to say they are not capable of maintaining the temperature of the packaged goods at the desired level for a sufficiently long period.

The object of the present invention is therefore to produce an insulating container having a better thermal insulation than currently available containers.

This object is met by the present invention in that the walls of the container are composed of a plurality of layers forming an air-cushion and further include a reflecting layer.

Thus, according to the present invention there is provided an insulating container (1) characterised by the fact that the walls (10) of the container (1) are composed of a plurality of layers (11, 12) forming an air cushion and include a reflecting layer (13).

The insulation property of an insulating container according to the invention can be influenced advantageously by the further design details set out in Claims 2 to 8, the features described there producing an increase in the thermal insulating property both individually and in combination with one another.

The reflecting layer can be one of the layers forming the air cushion and can be a metallised layer of a plastics material.

The invention will be described by way of example on the basis of the attached drawings. In the drawings,

Fig. 1 shows an insulating carrier according to the invention, side view,

Fig.2 shows a cross-section through a wall of the insulating carrier according to Fig.1.

Fig.3 shows the temperature curve on the surface and in the core of a packaged item located in an insulating carrier according to Figs. 1 and 2.,

Fig.4 shows temperature curves like those of Fig. 3, but for a packaged item which is put into an insulating carrier the walls of which comprise more than two layers, and

Fig. 5 shows the temperature curve as for Figs. 3 and 4, but for a packaged item which is located in a simple polyethylene carrier bag.

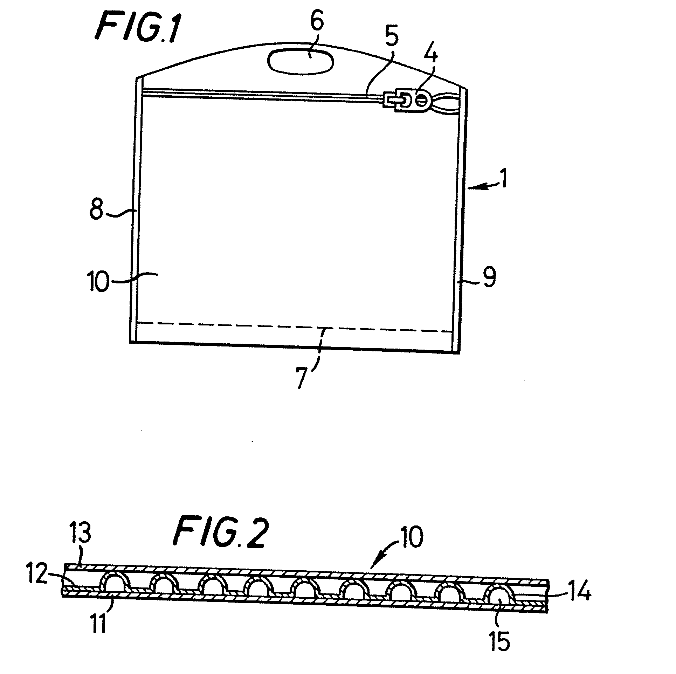

The insulating carrier represented in side view in Fig. 1 is designated overall by 1. It consists basically of two side walls 10 which are joined to each other at their side edges 8, 9, this being done preferably by welding. In the zone of its bottom edge a bottom pleat 7 is provided in the insulating carrier 1. On the top side of the insulating carrier 1 there is a carrying handle 6, in the region of which stiffeners may be provided, as used for plastic carriers and bags in the normal way.

In the zone of its top side the insulating carrier can be closed by a sliding closure 4, by means of which profiled edges 5 can be pressed together in a manner in itself known so as to be virtually airtight.

The structure of the walls of the insulating carrier 1 can be seen from the cross-section according to Fig. 2. The wall consists of an air-cushion and a reflecting layer 13 which is preferably a metal foil, whilst the air-cushion in the form of embodiment represented in Fig. 2 for its part is a two-layer structure with one substantially plain layer 11 and a second layer 12 provided with projections 14 or corrugations, the plain layer 11 and the corrugated layer 12 being fixed to each other in such a way that the interior spaces in the projections 14 form compartments sealed against the outside air. The layers 11, 12 are preferably welded to each other. The reflecting layer 13 comprises as support material a weldable plastic film, which has been metallised for example by spraying, vacuum metallising or electrolytic deposition.

Instead of the cross-section represented in Fig. 2, the walls of the insulating carrier 1 may also have a structure in which the metallic reflecting layer is located on the plain side of the air-cushion. In this case the metallic reflecting layer may be applied direct on to the air-cushion, without a support film, by means of spraying, vacuum metallising or electrolytic deposition.

In a further form of embodiment according to the invention the walls of the insulating carrier may consist of more than two layers.

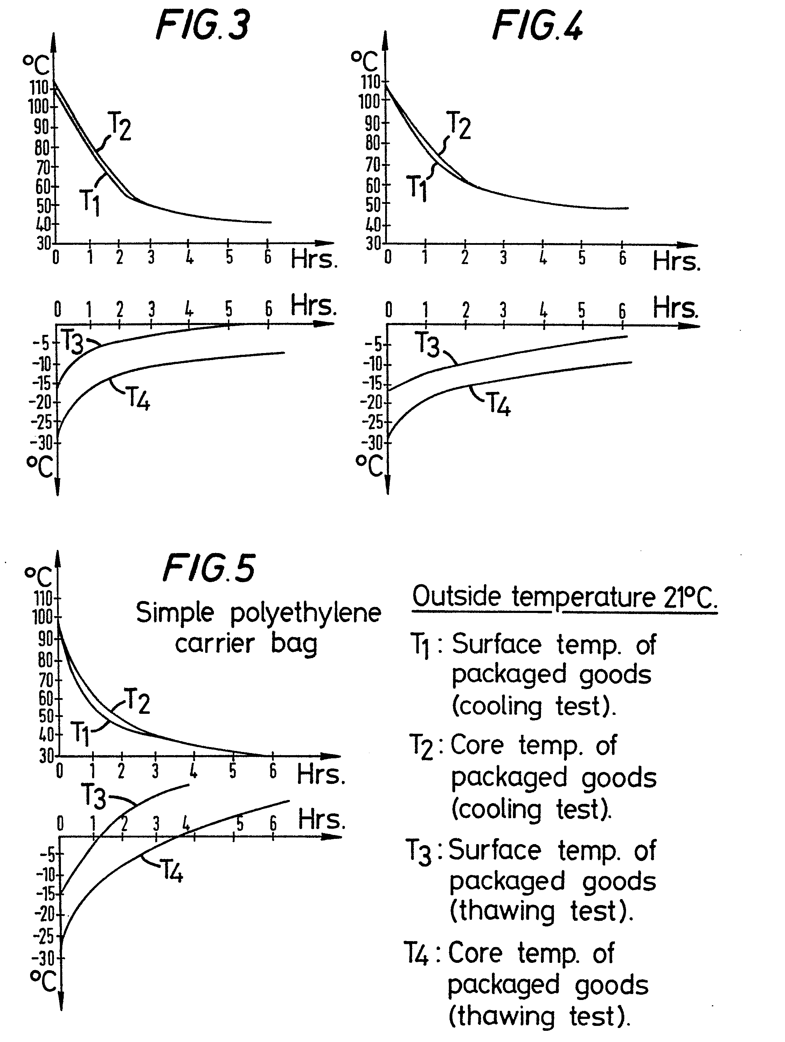

In the temperature curves as plotted in Figs. 3 to 5 the temperature is plotted in °C on the ordinate and the time in hours on the abscissa. In each case the initial temperature of the packaged item was 100°C for hot goods, and −30°C for cold packaged goods.

From Fig. 3 it can be seen that both the surface and the core temperature of the hot packaged item is still between 50 and 60°C after 3 hours, whilst the corresponding temperatures according to Fig. 5, top half, for packaged goods put into an ordinary polyethylene carrier bag are reached already after one hour. For cold packaged goods the differences are similarly significant, as a comparison of the two lower temperature curves in Fig. 3 with the two corresponding temperature curves in Fig. 5 shows.

The temperature curve shown in Fig. 4 shows that a still further improvement can be achieved in the insulating effect with a foil material of more than two layers.

Claims:

1. An insulating container (1) characterised by the fact that the walls (10) of the container (1) are composed of a plurality of layers (11,12) forming an air cushion and include a reflecting layer (13).

2. An insulating container as claimed in Claim 1, characterised by the fact that the air cushion comprises of a plurality of compartments (15) formed by the layers (11,12).

3. An insulating container as claimed in Claim 1 or Claim 2, characterised by the fact that the reflecting layer (13) is a metal foil.

4. An insulating container as claimed in Claims 1, 2 or 3, characterised by the fact that the reflecting layer (13) is a surface layer applied to the surface of the air-cushion by spraying, vacuum metallising or similar deposition process.

5. An insulating container as claimed in Claims 1 to 4, characterised by the fact that one of the layers forming the air cushion is substantially plain and the second layer (12) is fixed thereto and has a plurality of raised portions (14) forming compartments (15) sealed against the outside air.

6. An insulating container as claimed in Claims 1 to 5, characterised by the fact that the reflecting layer (13) is arranged on the outside of the air cushion.

7. An insulating container as claimed in Claims 1 to 6, characterised by the fact that the container (1) is provided with an airtight sliding closure.

8. An insulating container as claimed in Claims 1 to 7, characterised by the fact that the layers forming the air cushion consist of a thermoplastic material such as for example polyethylene.

*FIG.1*

*FIG.2*

# FIG.3

# FIG.4

# FIG.5

Simple polyethylene
carrier bag

Outside temperature 21°C.

$T_1$ : Surface temp. of
packaged goods
(cooling test).

$T_2$ : Core temp. of
packaged goods
(cooling test).

$T_3$ : Surface temp. of
packaged goods
(thawing test).

$T_4$ : Core temp. of
packaged goods
(thawing test).

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 142 599 (CHAVANNES) <br><br>*Column 1, lines 8-16; column 1, lines 41-54; column 3, lines 36-45; column 8, lines 40-48; figure 20* | 1,2,3, 5,6,8 | B 65 D 31/04 <br> B 65 D 81/38 |
| Y | | 4,7 | |
| Y | DE-A-2 641 484 (CETA) <br> *Pages 3 and 4; figures* | 4 | |
| Y | DE-A-2 454 945 (VOGLIANO) <br> *The whole document* | 7 | |
| A. | FR-A-2 345 295 (REVERCHON-ROCAPHANE) <br> *The whole document* | 1,4,6 | TECHNICAL FIELDS SEARCHED (Int. Cl. ³) |
| A | FR-A-2 127 507 (SEALED AIR CORP.) <br> *Page 3, lines 3-18; page 3, line 32 - page 5, line 9; page 6, lines 9-18; figures 1-11* | 1,2,5, 8 | B 65 D |
| A | FR-A-2 044 592 (NORMOS) <br> *The whole document* | 1,3,6 | |
| A | DE-A-2 342 483 (LEHA-HANDELSGESELLSCHAFT) | | |

-/-

The present search report has been drawn up for all claims

| Place of search <br> THE HAGUE | Date of completion of the search <br> 03-05-1983 | Examiner <br> MARTENS L.G.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

| | DOCUMENTS CONSIDERED TO BE RELEVANT | | Page 2 | |
|---|---|---|---|---|
| Category | Citation of document with indication, where appropriate, of relevant passages | Relevant to claim | CLASSIFICATION OF THE APPLICATION (Int. Cl. ³) | |
| A | US-A-3 695 507 (R.SAMS) | | | |
| | ----- | | | |
| | | | **TECHNICAL FIELDS SEARCHED (Int. Cl. ³)** | |

The present search report has been drawn up for all claims

| Place of search THE HAGUE | Date of completion of the search 03-05-1983 | Examiner MARTENS L.G.R. |
|---|---|---|